# DEMANDE DE BREVET EUROPEEN

(11) **EP 3 961 345 A1**
(43) Date de publication de la demande: **02.03.2022**
(21) Numéro de dépôt: 21192005.3
(22) Date de dépôt: 18.08.2021
(51) Int. Cl.: G05F 1/565, G05F 3/26, G06F 21/75, H04L 9/00

(54) **ALIMENTATION DE CIRCUIT ÉLECTRONIQUE**

(30) Priorité: 25.08.2020 FR 2008675
(71) Demandeur: STMicroelectronics (Rousset) SAS, 13790 Rousset (FR)
(72) Inventeur: DEMANGE, Nicolas, 83470 SAINT-MAXIMIN LA SAINTE BAUME (FR); BORREL, Nicolas, 13120 GARDANNE (FR); FORT, Jimmy, 13114 PUYLOUBIER (FR)
(74) Mandataire: Cabinet Beaumont

(57) **Abrégé**

La présente description concerne un dispositif d'alimentation de circuit électronique, configuré pour : faire passer, dans un premier conducteur (251) connecté à un nœud (150), un premier courant (I1') image d'un deuxième courant (I2) consommé par le circuit électronique ; faire passer un troisième courant (I3) dans un deuxième conducteur connecté audit nœud, une première branche d'un miroir de courant (174) faisant passer le troisième courant ; faire passer un quatrième courant (I4) constant dans un troisième conducteur connecté audit nœud ; consommer un cinquième courant (I5) image du troisième courant ; et réguler un potentiel dudit nœud (150) en agissant sur un potentiel de grille d'un transistor (T210) électriquement en série avec une deuxième branche du miroir de courant.

## Description

### Domaine technique

La présente description concerne de façon générale les dispositifs électroniques, et, en particulier, les dispositifs et procédés d'alimentation électrique de circuits électroniques.

### Technique antérieure

Un circuit électronique peut être intégré dans une puce électronique. La puce comprend typiquement un dispositif d'alimentation du circuit électronique, ayant pour fonction de fournir une tension au circuit électronique à partir d'une tension d'alimentation de la puce. Le circuit électronique consomme un courant variable en fonction de son fonctionnement. La tension fournie au circuit est typiquement stabilisée ou régulée, de sorte qu'elle conserve une valeur constante lors des variations du courant consommé par le circuit.

Le circuit électronique peut contenir des données confidentielles, qui doivent être protégées contre tout accès par une personne non autorisée. Ceci est le cas, par exemple, lorsque la puce est destinée à recevoir, stocker et/ou communiquer des mots de passe ou des données de cryptage telles que des clés. Il arrive alors qu'un attaquant cherche à se procurer tout ou partie des données confidentielles.

Dans un type d'attaque, l'attaquant fait fonctionner la puce et cherche à mesurer un courant fourni au dispositif d'alimentation du circuit électronique, dans le but, à partir de variations de ce courant, d'extraire des informations sur le fonctionnement du circuit électronique permettant de déduire les informations confidentielles.

### Résumé de l'invention

Il existe un besoin d'un dispositif et d'un procédé d'alimentation de circuit électronique contenant des données confidentielles, permettant de protéger les données confidentielles contre des attaques.

Il existe un besoin de simplifier les dispositifs et procédés existants d'alimentation de circuit électronique.

Un mode de réalisation pallie tout ou partie des inconvénients des dispositifs connus d'alimentation de circuit électronique.

Un mode de réalisation pallie tout ou partie des inconvénients des procédés connus d'alimentation de circuit électronique.

Selon un premier aspect, un mode de réalisation prévoit un dispositif d'alimentation de circuit électronique, configuré pour :
- faire passer, dans un premier conducteur connecté à un nœud, un premier courant image d'un deuxième courant consommé par le circuit électronique ;
- faire passer un troisième courant dans un deuxième conducteur connecté audit nœud,une première branche d'un miroir de courant faisant passer le troisième courant ;
- faire passer un quatrième courant constant dans un troisième conducteur connecté audit nœud ;
- consommer un cinquième courant image du troisième courant ; et
- réguler un potentiel dudit nœud en agissant sur un potentiel de grille d'un transistor électriquement en série avec une deuxième branche du miroir de courant.

Un mode de réalisation prévoit un procédé d'alimentation d'un circuit électronique, comprenant des étapes consistant à :
- faire passer, dans un premier conducteur connecté à un nœud, un premier courant image d'un deuxième courant consommé par le circuit électronique ;
- faire passer un troisième courant dans un deuxième conducteur connecté audit nœud, une première branche d'un miroir de courant faisant passer le troisième courant ;
- faire passer un quatrième courant constant dans un troisième conducteur connecté audit nœud ;
- consommer un cinquième courant image du troisième courant ; et
- réguler un potentiel dudit nœud en agissant sur un potentiel de grille d'un transistor électriquement en série avec une deuxième branche du miroir de courant.

Selon un mode de réalisation, ledit transistor relie un nœud d'application d'un potentiel, de préférence fixe, à des grilles reliées entre elles de transistors du miroir de courant.

Selon un mode de réalisation, ledit transistor est plus petit qu'un transistor de la deuxième branche du miroir de courant.

Selon un mode de réalisation, le potentiel dudit nœud est régulé à une valeur constante.

Selon un mode de réalisation, un élément résistif fait passer le quatrième courant.

Selon un mode de réalisation, la valeur constante est celle d'un potentiel régulé d'alimentation du circuit électronique.

Selon un mode de réalisation :
- une première branche d'un autre miroir de courant fait passer le premier courant ; et
- le potentiel dudit nœud est régulé à une valeur de potentiel d'une borne d'une deuxième branche dudit autre miroir de courant.

Selon un mode de réalisation, un amplificateur opérationnel reçoit un écart de potentiel entre ledit nœud et ladite borne de la deuxième branche dudit autre miroir de courant et agit sur le potentiel de grille dudit transistor.

Selon un mode de réalisation, la deuxième branche dudit autre miroir de courant est électriquement en série avec le circuit électronique entre une borne d'application d'une tension d'alimentation référencée par rapport à un potentiel de référence et une borne d'application du potentiel de référence.

Selon un mode de réalisation, le cinquième courant est fourni par la borne d'application de la tension d'alimentation.

Selon un mode de réalisation, une borne d'une deuxième branche dudit miroir de courant a un potentiel régulé à la valeur du potentiel dudit nœud.

Selon un mode de réalisation :
- un transistor supplémentaire est en série avec la deuxième branche dudit miroir de courant ; et
- le transistor supplémentaire est commandé par une sortie d'un amplificateur opérationnel recevant un écart entre le potentiel dudit nœud et le potentiel de ladite borne de la deuxième branche dudit miroir de courant.

Selon un mode de réalisation, un rapport entre valeurs des cinquième et troisième courants est égal à un autre rapport entre valeurs des deuxième et premier courants ou est égal à la somme dudit autre rapport et de l'unité.

Un mode de réalisation prévoit une puce électronique comprenant un dispositif tel que défini ci-dessus et le circuit électronique, ou configurée pour mettre en œuvre un procédé tel que défini ci-dessus.

Selon un deuxième aspect, un mode de réalisation prévoit un dispositif d'alimentation de circuit électronique, configuré pour :
- faire passer, dans un premier conducteur connecté à un nœud, un premier courant image d'un deuxième courant consommé par le circuit électronique ;
- faire passer un troisième courant dans un deuxième conducteur connecté audit nœud ;
- réguler un potentiel dudit nœud à une valeur constante en agissant sur le troisième courant ;
- faire passer un quatrième courant constant dans un troisième conducteur connecté audit nœud ; et
- consommer un cinquième courant image du troisième courant.

Un mode de réalisation prévoit un procédé d'alimentation d'un circuit électronique, comprenant des étapes consistant à :
- faire passer, dans un premier conducteur connecté à un nœud, un premier courant image d'un deuxième courant consommé par le circuit électronique ;
- faire passer un troisième courant dans un deuxième conducteur connecté audit nœud ;
- réguler un potentiel dudit nœud à une valeur constante en agissant sur le troisième courant ;
- faire passer un quatrième courant constant dans un troisième conducteur connecté audit nœud ; et
- consommer un cinquième courant image du troisième courant.

Selon un mode de réalisation, un élément résistif fait passer le quatrième courant.

Selon un mode de réalisation, la valeur constante est celle d'un potentiel régulé d'alimentation du circuit électronique.

Selon un mode de réalisation :
- une première branche d'un miroir de courant relié au premier conducteur fait passer le premier courant ; et
- une borne d'une deuxième branche du miroir de courant a un potentiel régulé à la valeur constante.

Selon un mode de réalisation, la deuxième branche du miroir de courant est électriquement en série avec le circuit électronique entre une borne d'application d'une tension d'alimentation référencée par rapport à un potentiel de référence et une borne d'application du potentiel de référence.

Selon un mode de réalisation, le cinquième courant est fourni par la borne d'application de la tension d'alimentation.

Selon un mode de réalisation :
- une première branche d'un miroir de courant relié au deuxième conducteur fait passer le troisième courant ;
- une deuxième branche du miroir de courant relié au deuxième conducteur consomme le cinquième courant ; et
- le potentiel dudit nœud est régulé par une action sur un potentiel de grilles reliées entre elles de transistors du miroir de courant relié au deuxième conducteur.

Selon un mode de réalisation, l'action sur le potentiel desdites grilles est mise en œuvre par un amplificateur opérationnel recevant un écart de potentiel entre ledit nœud et la borne de la deuxième branche du miroir de courant relié au premier conducteur.

Selon un mode de réalisation :
- l'action sur le potentiel desdites grilles est obtenue en agissant sur un potentiel de commande d'un autre transistor électriquement en série avec une deuxième branche du miroir de courant relié au deuxième conducteur ; et
- de préférence, ledit autre transistor relie lesdites grilles à un autre nœud d'application d'un potentiel d'alimentation.

Selon un mode de réalisation, ledit autre transistor est plus petit qu'un transistor de la deuxième branche du miroir de courant relié au deuxième conducteur.

Selon un mode de réalisation, une borne d'une deuxième branche du miroir de courant relié au deuxième conducteur a un potentiel régulé à la valeur constante.

Selon un mode de réalisation :
- un transistor supplémentaire est en série avec la deuxième branche du miroir de courant relié au deuxième conducteur ; et
- le transistor supplémentaire est commandé par une sortie d'un amplificateur opérationnel configuré pour amplifier un écart entre la valeur constante et le potentiel de ladite borne de la deuxième branche du miroir de courant relié au deuxième conducteur.

Selon un mode de réalisation, un rapport entre valeurs des cinquième et troisième courants est égal à un autre rapport entre valeurs des deuxième et premier courants ou est égal à la somme dudit autre rapport et de l'unité.

Un mode de réalisation prévoit une puce électronique comprenant un dispositif tel que défini ci-dessus et le circuit électronique, ou configurée pour mettre en œuvre un procédé tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un exemple de dispositif d'alimentation d'un circuit électronique d'un type auquel s'appliquent les modes de réalisation décrits ;
la figure 2 représente, de manière schématique, un exemple d'un mode de réalisation d'un dispositif d'alimentation de circuit électronique, selon un premier aspect ;
la figure 3 représente, de manière schématique, un exemple d'un mode de réalisation d'un dispositif d'alimentation de circuit électronique, selon un deuxième aspect ; et
la figure 4 représente, de manière schématique, un mode de réalisation d'un dispositif d'alimentation de circuit électronique combinant les premier et deuxième aspects.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, un circuit électronique alimenté par un dispositif d'alimentation n'est pas décrit en détail, les modes de réalisation décrits étant compatibles avec les circuits des puces électroniques usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Des modes de réalisation décrits comprennent des transistors de type dit Métal-Oxyde-Semiconducteur, MOS (en anglais "metal-oxide-semiconductor"). Bien que le type MOS désignait à l'origine des transistors ayant une grille en métal et un isolant de grille en oxyde, le type MOS est maintenant, suite au développement de ce type de transistor, compris comme englobant des transistors à effet de champ dont la grille est en n'importe quel conducteur électrique, et dont l'isolant de grille est en n'importe quel diélectrique ou isolant électrique.

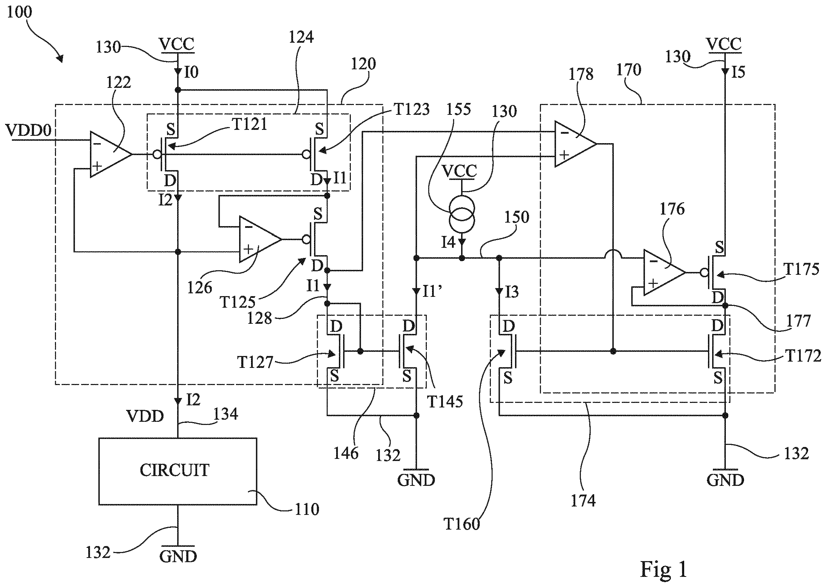

La figure 1 représente, de manière schématique, un exemple de dispositif d'alimentation 100 d'un circuit électronique 110 (CIRCUIT), d'un type auquel s'appliquent les modes de réalisation décrits.

Le dispositif d'alimentation 100 et le circuit électronique 110 sont typiquement compris dans une puce électronique. La puce électronique peut être constituée d'un boîtier, de préférence étanche, et d'une ou plusieurs portions de plaquette (en anglais "wafer"), de préférence semiconductrices, dans et sur lesquelles sont formés le dispositif 100 et le circuit 110. Le boîtier comprend des plages de connexion ou des broches de connexion à d'autres circuits électroniques extérieurs au boîtier, par exemple à un circuit imprimé, PCB (en anglais "Printed Circuit Board"). La puce électronique peut également être constituée par une portion de plaquette, de préférence semiconductrice, dans et sur laquelle sont situés le dispositif 100 et le circuit 110.

Le circuit 110 peut être tout type de circuit de puce électronique. Le circuit 110 peut comprendre plusieurs sous-circuits alimentés en parallèle par le dispositif 100. La puce électronique peut en outre comprendre d'autres circuits électroniques que le circuit 110.

Le dispositif 100 comprend un ensemble 120 électriquement en série avec le circuit électronique 110 entre :
- une borne, ou nœud, 130 d'application d'une tension d'alimentation VCC référencée par rapport à un potentiel de référence GND, par exemple une masse ; et
- une borne, ou nœud, 132 d'application du potentiel de référence GND.
Par borne d'application d'une tension référencée à un potentiel de référence, on entend que cette tension est égale à une différence entre un potentiel appliqué à cette borne et le potentiel de référence. Dit autrement, la tension VCC correspond au potentiel appliqué à la borne 130. La tension VCC peut être une tension fournie à la puce électronique pour son fonctionnement.

Typiquement, l'ensemble 120 est situé, par rapport au circuit 110, du côté de la borne 130 d'application de la tension VCC. Par exemple, l'ensemble 120 est connecté ou relié à la borne 130. En outre, l'ensemble 120 peut être relié, de préférence connecté, à la borne 132 d'application du potentiel de référence GND.

L'ensemble 120 fournit au circuit 110, sur un nœud 134 de connexion entre l'ensemble 120 et le circuit 110, une tension VDD référencée par rapport au potentiel de référence GND. Autrement dit, la tension VDD référencée au potentiel de référence GND, ou potentiel VDD, est appliquée au nœud 134.

Dans l'exemple représenté, les tensions VCC et VDD sont positives. La tension VCC d'alimentation de la puce est typiquement comprise entre 3,3 V et 5 V, et la tension VDD fournie par l'ensemble 120 est typiquement de l'ordre de 1,2 V.

L'ensemble 120 peut comprendre un transistor T121, par exemple de type MOS à canal P, reliant les nœuds 130 et 134. Plus précisément, le transistor T121 a ses bornes de conduction reliées, de préférence connectées, aux nœuds respectifs 130 et 134. Par bornes de conduction d'un transistor, on entend les bornes que le transistor connecte électriquement entre elles à un état passant et isole électriquement entre elles à un état bloqué. Dans l'exemple représenté, le transistor T121 a une borne de source (S) reliée, de préférence connectée, au nœud 130, et une borne de drain (D) reliée, de préférence connectée, au nœud 134.

L'ensemble 120 peut comprendre un amplificateur opérationnel 122 commandant le transistor T121. Autrement dit, dans l'exemple où le transistor T121 est de type MOS, transistor T121 a une grille reliée, de préférence connectée, à une sortie de l'amplificateur opérationnel 122. L'amplificateur opérationnel 122 reçoit ainsi un écart entre la tension VDD fournie au circuit électronique 110 et un potentiel VDD0 ayant une valeur constante (c'est-à-dire constant par rapport au potentiel GND). Plus précisément, une entrée non inverseuse (+) de l'amplificateur opérationnel 122 peut être reliée, de préférence connectée, au nœud 134, et une entrée inverseuse (-) de l'amplificateur opérationnel 122 peut être reliée, de préférence connectée, à un nœud d'application du potentiel constant VDD0. Des éléments fournissant le potentiel VDD0 à partir de la tension VCC ne sont ni décrits, ni représentés, les modes de réalisation étant compatibles avec de tels éléments usuels.

En fonctionnement, l'amplificateur opérationnel 122 et le transistor T121 régulent, c'est-à-dire stabilisent, la tension VDD fournie au circuit 110 à une valeur égale à la valeur constante du potentiel VDD0. Autrement dit, l'amplificateur opérationnel 122 agit sur la commande du transistor T121 afin de maintenir la tension VDD fournie au circuit 110 à la valeur constante du potentiel VDD0.

L'ensemble 120 peut comprendre un transistor T123 formant un miroir de courant 124 avec le transistor T121.

Par miroir de courant, on entend un circuit comprenant deux branches prévues pour qu'un courant dans l'une des branches soit image d'un courant dans l'autre des branches. Par courants images l'un de l'autre, on entend que les valeurs de ces courants ont entre elles un rapport constant. De préférence, un miroir de courant comprend, plus préférentiellement est constitué par, deux transistors MOS à canaux de même type de conductivité recevant une même tension de commande. Par tension de commande, on entend, dans un transistor de type MOS, une tension appliquée entre la grille et la source du transistor. Les transistors du miroir de courant sont prévus, d'une manière usuelle dans un miroir de courant, pour que des courants circulant dans ces transistors soient, lorsque les potentiels de leurs drains sont égaux, dans un rapport, ou ratio, constant égal à un rapport de dimensions des transistors. De préférence, dans un miroir de courant, les deux transistors ont leurs grilles reliées entre elles, plus préférentiellement connectées entre elles, et leurs sources reliées entre elles, plus préférentiellement connectées entre elles. De préférence, dans un miroir de courant, chaque transistor définit une branche du miroir de courant. En variante, les branches peuvent comprendre des résistances respectives ayant entre elles un rapport prédéfini de valeurs.

Par rapport de dimensions entre les transistors, on entend le rapport de la largeur (W) sur longueur (L) de grille d'un transistor par rapport à la largeur sur longueur de grille de l'autre transistor.

L'ensemble 120 peut comprendre un transistor T125, par exemple de type MOS à canal P. Le transistor T125 a par exemple sa source reliée, de préférence connectée, au drain du transistor T123. Le transistor T125 est commandé par un amplificateur opérationnel 126. L'amplificateur opérationnel 126 reçoit un écart de potentiel entre les bornes de drain des transistors T121 et T123 du miroir de courant 124. Plus précisément, l'amplificateur opérationnel 126 reçoit, sur une entrée inverseuse (-), le potentiel de drain du transistor T123, et, sur une entrée non inverseuse (+), le potentiel de drain du transistor T121.

En fonctionnement, le dispositif consomme un courant I0 fourni par le nœud VCC. L'amplificateur 126 et le transistor T125 régulent le potentiel de drain du transistor T123 afin que le potentiel de drain du transistor T123 soit égal à celui de drain du transistor T121. Ceci permet d'obtenir dans le transistor T123 un courant I1 dont la valeur présente un rapport constant avec un courant I2 consommé par le circuit électronique 110. Autrement dit, le courant I1 est une image du courant I2. Les courants I1 et I2 vérifient l'égalité I1 = I2/K124, où K124 désigne une constante et dans laquelle les courants et leurs valeurs sont désignés de la même manière par souci de simplicité. Du fait que le courant I0 est la somme des courants I1 et I2, les courants I0 et I1 vérifient alors l'égalité I1 = I0/(K124 +1), autrement dit, le courant I1 est également image du courant I0. A titre d'exemple, la constante K124 est comprise entre 5 et 200, de préférence égale à 100.

L'ensemble 120 peut comprendre en outre un transistor T127, par exemple de type MOS à canal N. Le transistor T127 a une borne de drain 128 connectée ou reliée, de préférence par le transistor T125, au drain du transistor T123. La source du transistor T127 est reliée, de préférence connectée, à la borne 132 d'application du potentiel de référence GND. Autrement dit, les transistors T123, T127 et T125 sont électriquement en série entre les bornes 130 et 132. En particulier, les transistors T123, T125 et T127 sont parcourus par le même courant I1. Le transistor T127 a sa grille et son drain reliés entre elles, de préférence connectés ensemble.

Le dispositif 100 comprend un nœud 150. Le nœud 150 est relié à la borne 132 d'application du potentiel de référence GND par un transistor T145. Le transistor T145 peut être de type MOS à canal N. En particulier, le transistor T145 a une borne de drain reliée, de préférence connectée, au nœud 150, et une borne de source reliée, de préférence connectée, à la borne 132.

Les transistors à canal N T127 et T145 forment un miroir de courant 146. La borne de drain 128 et le nœud 150 constituent les bornes des branches respectives du miroir de courant.

En fonctionnement, la branche du miroir de courant 146 constituée par le transistor T145 fait passer un courant I1' provenant du nœud 150.

Le dispositif 100 comprend en outre une source de courant 155 reliant la borne 130 d'application de la tension VCC au nœud 150. La source de courant fournit un courant constant I4 au nœud 150.

Le dispositif 100 comprend un transistor T160 reliant le nœud 150 à la borne 132 d'application du potentiel de référence. Le transistor T160 peut être de type MOS à canal N, le drain du transistor T160 étant relié, de préférence connecté, au nœud 150, et la source du transistor T160 étant reliée, de préférence connectée, à la borne 132.

Le dispositif 100 comprend en outre un ensemble 170 commandant le transistor T160. L'ensemble 170 relie les bornes 130 d'application de la tension VCC et 132 d'application du potentiel de référence GND. L'ensemble 170 reçoit un écart entre les potentiels du nœud 150 et de la borne de drain 128 du transistor T127. Autrement dit, l'ensemble 170 reçoit un écart entre les potentiels des bornes des branches du miroir de courant 146.

L'ensemble 170 comprend un transistor T172 formant, avec le transistor T160, un miroir de courant 174. Le transistor T172 peut être de type MOS à canal N. Le transistor T172 peut avoir sa source reliée, de préférence connectée, à la borne 132 d'application du potentiel de référence GND. Le drain du transistor T172 peut être connecté ou relié, de préférence par un transistor T175, à la borne 130 d'application du potentiel VCC. Le transistor T175 est alors en série, entre les bornes 130 et 132, avec la branche du miroir de courant 174 constituée par le transistor T172.

De préférence, l'ensemble 170 comprend un amplificateur opérationnel 176 commandant le transistor T175. L'amplificateur opérationnel 176 reçoit un écart entre potentiels des drains des transistors du miroir de courant 174, autrement dit, l'amplificateur opérationnel 176 est configuré pour amplifier cet écart. Par exemple, le transistor T175 est de type MOS à canal P, et l'amplificateur opérationnel 176 a une entrée inverseuse (-) reliée, de préférence connectée, au nœud 150, et une entrée non inverseuse (+) reliée, de préférence connectée, à un nœud 177 de connexion l'un à l'autre des drains des transistors T172 et T175. Le nœud 177 définit une borne de la branche du miroir de courant 174 constituée par le transistor T172.

En fonctionnement, le transistor T160 provoque le passage d'un courant I3 en provenance du nœud 150, autrement dit, le transistor T160 fait passer le courant I3. L'amplificateur 176 et le transistor T175 régulent le potentiel de la borne 177 à la valeur du potentiel du nœud 150. Il en résulte que le transistor T172 fait passer un courant I5, image du courant I3 et fourni par la borne 130 d'application du potentiel VCC.

Le dispositif 100 comprend en outre un amplificateur opérationnel 178. L'amplificateur opérationnel 178 reçoit un écart de potentiel entre le nœud 150 et la borne 128 de drain du transistor T127. Plus précisément, l'amplificateur opérationnel 178 a une entrée inverseuse (-) reliée, de préférence connectée, à la borne de drain 128 et une entrée non-inverseuse (+) reliée, de préférence connectée, au nœud 150. L'amplificateur opérationnel 178 agit sur le potentiel des grilles reliées entre elles des transistors T160 et T172 du miroir de courant 174. Autrement dit, la sortie de l'amplificateur opérationnel 178 est reliée, de préférence connectée, aux grilles des transistors T160 et T172.

En fonctionnement, l'amplificateur opérationnel 178 régule le potentiel du nœud 150 à une valeur égale à celle du potentiel de la borne de drain 128, en agissant sur le courant I3. Il en résulte que le courant I1' est l'image du courant I1 par le miroir de courant 146. Du fait que le courant I1 est image des courants I2 et I0, le courant I1' est image des courants I0 et I2 et présente avec le courant I0 un rapport de valeurs 1/K, autrement dit, le courant I1' vérifie la relation I1' = I0/K. A titre d'exemple, le miroir de courant 146 présente un ratio de courants égal à 1. Le rapport 1/K peut être égal à 1/(K124+1), par exemple égal à 1/101.

De préférence, les transistors T160 et T172 sont prévus pour que le courant I5 présente avec le courant I3 un rapport K inverse du rapport 1/K entre le courant I1' et le courant I0. Autrement dit, le rapport K entre les valeurs des courants I5 et I3 est égal à la somme de l'unité 1 et du rapport K124 entre les valeurs des courants I2 consommé par le circuit 110 et I1' dans le transistor T145. En conséquence, la somme I0+I4+I5 des courants I0, I4 et I5 fournis par la borne 130 reste constante, égale à une valeur (K+1)*I4, quelles que soient les variations du courant I2 consommé par le circuit électronique 110.

Ainsi, un attaquant cherchant des variations du courant I0+I5 consommé par la puce électronique pour en déduire des données confidentielles présentes dans le circuit électronique 110, ne trouverait aucune variation et ne pourrait mener à bien son attaque. Le circuit électronique est donc protégé contre de telles attaques.

Selon un premier aspect, des modes de réalisation de dispositifs et de procédés d'alimentation d'un circuit électronique protégeant le circuit électronique contre les attaques décrites ci-dessus, permettent, par rapport à l'exemple du dispositif 100 de la figure 1, une amélioration de la protection contre les attaques et/ou des variations plus rapides du courant I2 fourni au circuit électronique et/ou une réduction de variations résiduelles de la tension VDD fournie au circuit.

Selon un deuxième aspect, des modes de réalisation de dispositifs et de procédés d'alimentation d'un circuit électronique protégeant le circuit électronique contre les attaques décrites ci-dessus, permettent, par rapport à l'exemple du dispositif 100 de la figure 1, une mise en œuvre plus facile et/ou un nombre de composants réduit.

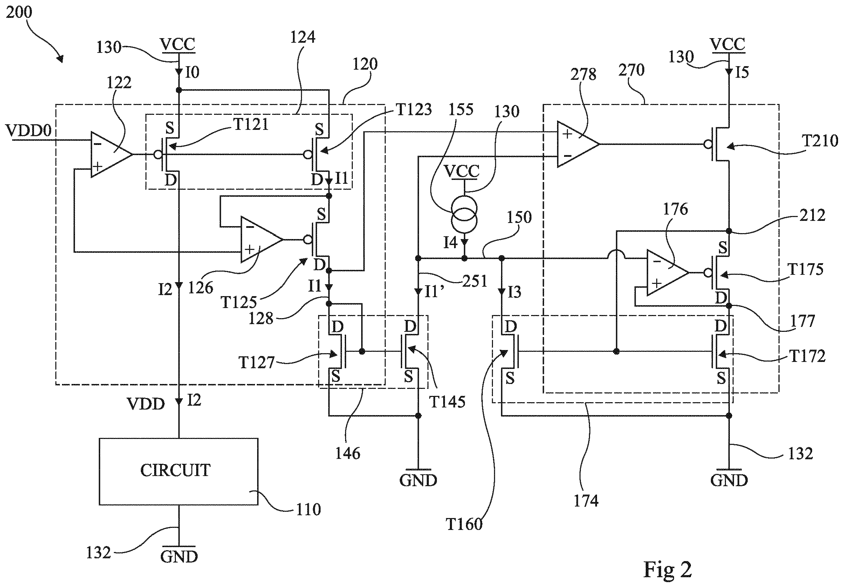

La figure 2 représente, de manière schématique, un exemple d'un mode de réalisation d'un dispositif d'alimentation 200 d'un circuit électronique 110 extérieur au dispositif, selon le premier aspect. Le circuit 110 est du type décrit ci-dessus en relation avec la figure 1. Le dispositif 200 et le circuit 110 sont, de préférence, compris dans une puce électronique.

Dans l'exemple représenté, le dispositif 200 comprend des éléments identiques ou similaires à ceux du dispositif 100 de la figure 1, agencés de manière identique ou similaire. Ces éléments et leur agencement ne sont pas décrits ici à nouveau en détail. Seules les différences sont mises en exergue.

Le dispositif 200 diffère du dispositif 100 de la figure 1 en ce que, dans le dispositif 200, l'ensemble 170 du dispositif 100 de la figure 1 est remplacé par un ensemble 270. Comme l'ensemble 170 du dispositif 100 de la figure 1, l'ensemble 270 a pour fonction de commander le transistor T160 de manière à réguler le potentiel du nœud 150 en agissant sur le courant I3, et de consommer un courant I5 image du courant I3. De la même manière que dans le dispositif 100 de la figure 1, le courant I5 consommé par l'ensemble 270 s'ajoute au courant I0 consommé par le circuit électronique 110 et par l'ensemble 120, de telle sorte que le courant total consommé par le dispositif 200 et le circuit 110 reste constant au cours du fonctionnement du circuit 110. Le dispositif 200 protège ainsi le circuit 110 contre les attaques.

L'ensemble 270 du dispositif 200 diffère de l'ensemble 170 du dispositif 100 de la figure 1, en ce que :
- l'ensemble 270 comprend un transistor T210 électriquement en série avec la branche du miroir de courant 174 définie par le transistor T172 ;
- l'amplificateur opérationnel 178 de l'ensemble 170 de la figure 1 est remplacé par un amplificateur opérationnel 278. L'amplificateur opérationnel 278 reçoit un écart de potentiel entre la borne de drain 128 et le nœud 150, et commande le transistor T210 ; et
- une borne de conduction du transistor T210, située du côté du transistor T175, est reliée, de préférence connectée, aux grilles des transistors T172 et T160 du miroir de courant 174. Autrement dit, le transistor T210 relie les grilles des transistors T172 et T160 au nœud 130 d'application du potentiel VCC. Le potentiel VCC est, de préférence, fixe, c'est-à-dire constant par rapport au potentiel GND.

Dans l'exemple représenté, le transistor T210 est de type MOS à canal P. Dans cet exemple, la source du transistor T210 est reliée, de préférence connectée, au nœud 130 d'application du potentiel d'alimentation VCC. Dans cet exemple, l'amplificateur 278 a une entrée non inverseuse (+) reliée, de préférence connectée, à la borne 128, une entrée inverseuse (-) reliée, de préférence connectée, au nœud 150 et une sortie reliée, de préférence connectée, à la grille du transistor T210.

De préférence, le transistor T175 relie entre eux les drains des transistors T210 et T172, autrement dit, le transistor T175 est en série avec les transistors T210 et T172 et est situé entre les transistors T210 et T172.

En fonctionnement, l'amplificateur 278 agit sur le potentiel de grille du transistor T210. Du fait que le transistor T210 relie les grilles des transistors T172 et T160 au nœud 130 d'application du potentiel VCC, il en résulte une action sur le potentiel des grilles reliées entre elles des transistors T172 et T160 du miroir de courant 174. Ceci agit sur le courant I3, de manière à réguler le potentiel du nœud 150 à la valeur du potentiel de la borne de drain 128 du transistor T127. Le transistor T160 est ainsi commandé de manière à réguler le potentiel du nœud 150 en agissant sur le courant I3.

Par rapport au dispositif 100 de la figure 1, la sortie de l'amplificateur 278 commande donc la grille du transistor T172 par l'intermédiaire du transistor T210. Comme mentionné ci-dessus, le transistor T172 a typiquement des dimensions supérieures à celles du transistor T160, autrement dit, le transistor T160 est plus petit que le transistor T172. Par exemple, le rapport entre dimensions des transistors T172 et T160 est compris entre environ 50 et environ 200, de préférence est égal à 101. En particulier, le transistor T210 est plus petit que le transistor T175.

En conséquence, le transistor T172 a une capacité parasite de grille relativement élevée par rapport à celle du transistor T210. Du fait que la sortie de l'amplificateur 278 commande le transistor T172 par l'intermédiaire du transistor T210, la commande du transistor T172 par l'amplificateur 278 est plus rapide que la commande du transistor T172 par l'amplificateur 178 du dispositif 100 de la figure 1.

Il en résulte que, par rapport au dispositif 100 de la figure 1, le courant I5 consommé par le dispositif 200 suit plus rapidement les variations du courant I2 consommé par le circuit 110.

Du fait que le transistor T210 est en série avec le transistor T172, lors d'une variation du courant I2 provoquant transitoirement une différence entre les potentiels du nœud 150 et du drain du transistor T172, l'amplificateur 278 et le transistor T210 agissent sur le potentiel du drain du transistor T172 de manière à compenser cette différence plus rapidement que dans un circuit tel que l'ensemble 170 du dispositif de la figure 1. Dans l'exemple représenté, si le potentiel du nœud 150 augmente transitoirement, le transistor T210 devient plus passant, ce qui contribue à augmenter le potentiel du drain du transistor T172. Dans l'exemple représenté, si le potentiel du nœud 150 diminue transitoirement, le transistor T210 devient moins passant, ce qui contribue à diminuer le potentiel du drain du transistor T172. Ceci contribue à faire suivre les variations du courant I2 par le courant I5 plus rapidement que dans un dispositif d'alimentation dans lequel le potentiel des grilles des transistors T160 et T172 serait commandé par l'intermédiaire d'un transistor non situé en série avec le transistor T172.

Le fait que le courant I5 suive plus rapidement les variations du courant I2 réduit la durée et l'amplitude de variations résiduelles transitoires du courant consommé par la puce aux moments où le courant I2 change de valeur. Ceci permet, pour une même rapidité des changements de valeur du courant I2, de réduire un risque qu'un attaquant détecte transitoirement ces variations résiduelles du courant consommé par la puce. La protection contre les attaques est donc améliorée. Ceci permet également, pour un niveau de protection donné, c'est-à-dire un niveau donné de variations résiduelles du courant consommé par la puce, que le courant I2 consommé par le circuit électronique 110 varie plus rapidement. Le circuit électronique 110 peut donc être plus rapide et/ou, en augmentant la rapidité de l'amplificateur opérationnel 122, on peut fournir une tension VDD plus stable au circuit 110.

Les modes de réalisation selon le premier aspect ne se limitent pas à l'exemple particulier décrit ci-dessus. Dans le dispositif 200, on peut remplacer l'ensemble 120 par tout circuit configuré pour :
- commander le transistor T145 ; et
- fournir une valeur du potentiel du nœud 150 pour laquelle le courant I1' dans le transistor T145 est image du courant I2 consommé par le circuit 110.

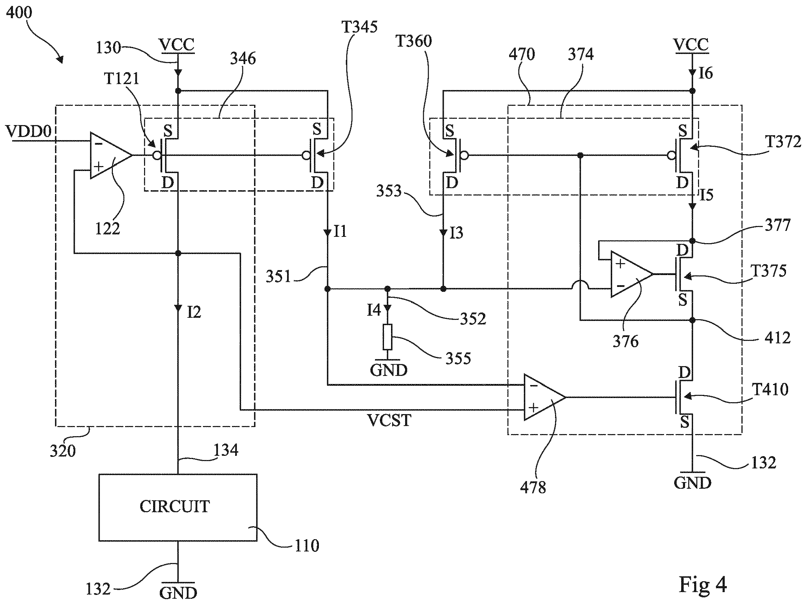

En particulier, à la place du transistor T145 reliant le nœud 150 à la borne 132 d'application du potentiel de référence, on peut prévoir un transistor reliant le nœud 150 à la borne 130 d'application de la tension VCC, comme ceci est décrit ci-après en relation avec la figure 4. Le courant I1'passant, c'est-à-dire circulant, dans un conducteur 251 connecté au nœud 150 en provenant du nœud 150, est remplacé par un courant passant dans un conducteur connecté au nœud 150 en se dirigeant vers le nœud 150.

L'ensemble 120 et le transistor T145 peuvent ainsi être remplacés par tout circuit configuré pour faire passer un courant dans un conducteur connecté au nœud 150, et pour fournir une valeur du potentiel du nœud 150 pour laquelle ce courant est image du courant I2 consommé par le circuit 110.

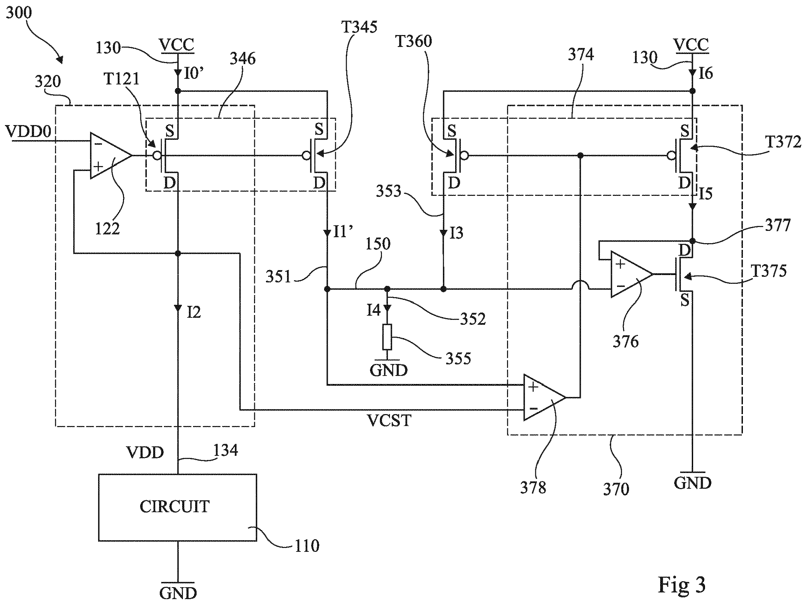

La figure 3 représente, de manière schématique, un mode de réalisation d'un dispositif d'alimentation 300 d'un circuit électronique 110 extérieur au dispositif 300, selon un deuxième aspect. Le circuit 110 est du type décrit ci-dessus en relation avec la figure 1. Le dispositif 300 et le circuit 110 sont, de préférence, compris dans une puce électronique. Le dispositif 300 comprend des éléments identiques ou similaires à ceux du dispositif 100 de la figure 1, qui ne sont pas décrits à nouveau en détail.

Le dispositif 300 comprend un ensemble 320 électriquement en série avec le circuit électronique 110 entre la borne 130 d'application de la tension VCC et la borne 132 d'application du potentiel de référence GND. De préférence, l'ensemble 320 est situé, par rapport au circuit 110, du côté de la borne 130 d'application du potentiel VCC. Par exemple, l'ensemble 320 est connecté à la borne 130. En outre, l'ensemble 320 peut être relié, de préférence connecté, à la borne 132 d'application du potentiel de référence GND. L'ensemble 320 fournit la tension VDD au circuit 110 sur le nœud 134 défini par la borne de drain du transistor T121.

L'ensemble 320 comprend un transistor T121 et un amplificateur opérationnel 122, identiques ou similaires à ceux du dispositif 100 de la figure 1, agencés de manière identique ou similaire. De la même manière que dans le dispositif 100 de la figure 1, l'amplificateur opérationnel 122 et le transistor T121 régulent la tension VDD fournie au circuit 110.

Le dispositif 300 comprend un nœud 150 relié à la borne 130 d'application de la tension VCC par un transistor T345. Le transistor T345 peut être de type MOS à canal P. En particulier, le transistor T345 a une borne de drain reliée, de préférence connectée, au nœud 150, et une borne de source reliée, de préférence connectée, à la borne 130.

Les transistors à canal P T121 et T345 forment un miroir de courant 346. La borne de drain 134 du transistor T121 et le nœud 150 constituent les bornes des branches respectives du miroir de courant 346. De préférence, les sources des transistors T121 et T345 sont reliées entre elles, plus préférentiellement connectées entre elles, et les grilles des transistors T121 et T345 sont reliées entre elles, plus préférentiellement connectées entre elles. La branche du miroir de courant 346 constituée par le transistor T121 est électriquement en série avec le circuit électronique 110 entre la borne 130 d'application de la tension VCC d'alimentation référencée et la borne 132 d'application du potentiel de référence GND.

En fonctionnement, la branche du miroir de courant 346 constituée par le transistor T345 fait passer un courant I1' dirigé vers le nœud 150 dans un conducteur 351 connecté au nœud 150 et relié au miroir de courant 346.

Le dispositif 300 comprend en outre un élément résistif 355 reliant le nœud 150 à la borne 132 d'application du potentiel de référence GND. L'élément résistif 355 prélève un courant I4 sur le nœud 150. Autrement dit, l'élément résistif 355 fait passer le courant I4 dans un conducteur 352 connecté au nœud 150. L'élément résistif 355 peut être constitué d'une résistance ou de plusieurs résistances en série et/ou en parallèle.

Le dispositif 300 comprend un transistor T360 reliant le nœud 150 à la borne 130 d'application de la tension VCC. Le transistor T360 peut être de type MOS à canal P, le drain du transistor T360 étant relié, de préférence connecté, au nœud 150, et la source du transistor T360 étant reliée, de préférence connectée, à la borne 130.

Le dispositif 300 comprend en outre un ensemble 370. L'ensemble 370 relie les bornes 130 d'application de la tension VCC et 132 d'application du potentiel de référence GND. L'ensemble 370 reçoit un écart entre les potentiels des bornes des branches du miroir de courant 146 (constituées par les nœuds 150 et 134).

L'ensemble 370 comprend un transistor T372 formant, avec le transistor T360, un miroir de courant 374. Le transistor T372 peut être de type MOS à canal P. Le transistor T372 peut avoir sa source reliée, de préférence connectée, à la borne 130 d'application de la tension VCC. Le drain du transistor T372 peut être connecté ou relié, de préférence par un transistor T375, à la borne 132 d'application du potentiel de référence. Le transistor T375 est alors en série, entre les bornes 130 et 132, avec le transistor T372 du miroir de courant 374.

De préférence, l'ensemble 370 comprend un amplificateur opérationnel 376 commandant le transistor T375 et recevant un écart entre les potentiels des drains des transistors du miroir de courant 374. Par exemple, le transistor est de type MOS à canal N, et l'amplificateur opérationnel 376 a une entrée inverseuse (-) reliée, de préférence connectée, au nœud 150 et une entrée non inverseuse (+) reliée, de préférence connectée, à un nœud 377 de connexion l'un à l'autre des drains des transistors T372 et T375. Le nœud 377 constitue une borne de la branche du miroir de courant 374 définie par le transistor T372.

Autrement dit, le miroir de courant 374, le transistor T375, et l'amplificateur 376 du dispositif 300 correspondent, respectivement, au miroir de courant 174, au transistor T175, et à l'amplificateur 176 du dispositif 100 de la figure 1, dans lesquels les signes de tensions ont été échangés, les types N et P de conductivité des canaux des transistors ont été échangés, et les bornes 130 et 132 ont été échangés.

Le fonctionnement est donc similaire à celui décrit en relation avec la figure 1. Le transistor T360 fait passer un courant I3 se dirigeant vers le nœud 150 dans un conducteur 353 connecté au nœud 150 et relié au miroir de courant 374. L'amplificateur 376 et le transistor T375 régulent le potentiel de la borne 377 à la valeur du potentiel du nœud 150. La branche du miroir de courant 374 constituée par le transistor T372 consomme un courant I5, image du courant I3, fourni par la borne 130 d'application du potentiel VCC.

Le dispositif 300 comprend en outre un amplificateur opérationnel 378. L'amplificateur opérationnel 378 reçoit un écart de potentiel entre le potentiel du nœud 150 et une valeur constante VCST. Plus précisément, l'amplificateur opérationnel 378 a une entrée non-inverseuse (+) reliée, de préférence connectée, au nœud 150 et une entrée inverseuse (-) recevant un potentiel ayant la valeur constante VCST. La sortie de l'amplificateur opérationnel 378 est reliée, de préférence connectée, aux grilles des transistors T360 et T372. Ainsi, l'amplificateur opérationnel 378 agit sur le potentiel des grilles reliées entre elles des transistors T360 et T372 du miroir de courant 374.

En fonctionnement, l'amplificateur opérationnel 378 régule le potentiel du nœud 150 à la valeur constante VCST en agissant sur le courant I3.

Du fait que le potentiel du nœud 150 est régulé à une valeur constante, le courant I4 est constant. Par rapport au dispositif 100 de la figure 1, on a ainsi obtenu le courant I4 constant de manière plus simple, en remplaçant la source de courant 155, prévue pour fournir un courant restant constant lorsque la tension varie aux bornes de la source de courant, par un simple élément résistif.

Selon un mode de réalisation, la valeur constante VCST est celle de la tension régulée VDD. Dans l'exemple représenté, l'entrée non inverseuse de l'amplificateur 378 est reliée, de préférence connectée, au nœud 134 d'application de la tension VDD. Dans un autre exemple, non représenté, l'entrée non inverseuse de l'amplificateur 378 est reliée ou connectée à un nœud d'un potentiel ayant même valeur que la tension VDD, tel que le potentiel VDD0, ce nœud étant par exemple l'entrée non inverseuse de l'amplificateur 122.

Du fait que la valeur constante VCST, à laquelle le potentiel du nœud 150 est régulée, soit égale à la valeur de la tension VDD, le courant I1 que le miroir de courant 346 fait passer dans le conducteur 351 est image du courant I2 consommé par le circuit électronique 110. Le courant I1 est donc image d'un courant I0' fourni par la borne 132, le courant I0' étant la somme des courants I1'et I2. Plus précisément, le courant I1' vérifie la relation I1' = I0'/(K346+1), où K346 est un rapport entre les courants I2 et I1'. Autrement dit, le courant I1 vérifie la relation I1' = I0'/K', avec K' = K346+1. La valeur K' peut être comprise entre 50 et 200, par exemple égale à 101.

On a ainsi fait passer, dans le conducteur 351 connecté au nœud 150, le courant I1' image du courant I0' sans utiliser de composants tels que les transistors T123, T125 et T127 du dispositif 100 de la figure 1. Le dispositif 300 est donc plus simple à mettre en œuvre et comprend moins de composants qu'un dispositif tel que le dispositif 100 de la figure 1.

Les transistors T360 et T372 sont prévus pour que les courants I5 et I3 aient entre eux un rapport de valeurs égal à la constante K346. Autrement dit, le rapport entre les courants I5 et I3 est le même qu'entre les courants I2 et I1'. Il en résulte qu'un courant I6 fourni par la borne 130, somme des courants I3 et I5, présente avec le courant I3 un rapport K inverse du rapport 1/K entre le courant I1' et le courant I0'. En conséquence, la somme I0'+I6 des courants I0 et I6 fournis par la borne 130 reste constante, égale à K*I4, quelles que soient les variations du courant I2 consommé par le circuit électronique 110. Il en résulte que le circuit 110 est protégé contre les attaques décrites ci-dessus.

Les modes de réalisation selon le deuxième aspect ne se limitent pas à l'exemple particulier décrit ci-dessus. Dans le dispositif 300, on peut remplacer l'ensemble 370 par tout circuit configuré pour :
- commander le transistor T360 de manière à réguler le potentiel du nœud 150 à la valeur constante VCST ; et
- consommer un courant I5 image du courant I3 circulant dans le transistor T360, c'est-à-dire faire passer le courant I5 image du courant I3 de l'une des bornes 130 et 132 à l'autre des bornes 130 et 132.

De préférence, ce circuit remplaçant l'ensemble 370 comprend un transistor formant un miroir de courant avec le transistor T360, le transistor T360 constituant une branche de ce miroir de courant. Une autre branche de ce miroir de courant consomme le courant I5. Dans cette autre branche, un potentiel d'une borne de drain est régulé à la valeur constante VCST, afin que les deux bornes de drain du miroir de courant aient le même potentiel. Ainsi, dans des variantes, l'entrée inverseuse de l'amplificateur 376 n'est pas connectée ou reliée au nœud 150, mais est connectée ou reliée à un autre nœud dont le potentiel est égal ou est régulé à la valeur constante VCST, tels que les nœuds 134 de fourniture de la tension VDD et l'entrée inverseuse de l'amplificateur 122.

En outre, l'ensemble 320 peut être remplacé par tout circuit configuré pour commander le transistor T345 en sorte de faire passer dans le transistor T345 un courant I1' image du courant I2 lorsque la tension aux bornes du transistor T345 a la valeur constante VCST. De préférence, ce circuit remplaçant l'ensemble 320 comprend un transistor formant un miroir de courant avec le transistor T345, le transistor T345 formant une branche de ce miroir de courant. Dans une autre branche de ce miroir de courant, un potentiel d'une borne de drain est régulé à la valeur constante VCST, afin que les deux bornes de drain du miroir de courant aient le même potentiel.

En particulier, à la place du transistor T345 reliant le nœud 150 à la borne 130 d'application du potentiel VCC, on peut prévoir un transistor tel que le transistor T145 (figure 1), reliant le nœud 150 à la borne 132 d'application du potentiel de référence GND. De même que le transistor T345, le transistor T145 fait passer un courant dans un conducteur connecté au nœud 150. Ainsi, un mode de réalisation comprend les mêmes éléments que ceux du dispositif 100 de la figure 1, à la différence que :
- l'amplificateur 178 (figure 1) reçoit la valeur constante VCST sur son entrée inverseuse ;
- on prévoit, en série avec les transistors T127 et T125, des éléments permettant de réguler la tension de la borne 128 de drain du transistor T127 à la valeur constante VCST ; et
- de préférence, la source de courant 155 est constituée par un élément résistif, ce qui permet de simplifier la source de courant 155.

L'ensemble 320 et le transistor T145 peuvent ainsi être remplacés par tout circuit configuré pour faire passer un courant dans un conducteur connecté au nœud 150 lorsque le potentiel du nœud 150 a la valeur constante VCST.

De plus, l'élément résistif 355 peut être remplacé par toute source de courant permettant d'obtenir le courant constant I4 lorsque la tension aux bornes de la source de courant a la valeur constante VCST. En particulier, l'élément résistif 355 n'est pas nécessaire pour bénéficier de l'avantage, mentionné ci-dessus, de ne pas utiliser de composants tels que les transistors T123, T125 et T127 (figure 1) .

La figure 4 représente, de manière schématique, un mode de réalisation d'un dispositif d'alimentation 400 d'un circuit électronique 110 combinant les premier et deuxième aspects. Le circuit 110 est du type décrit ci-dessus en relation avec la figure 1. Le dispositif 400 et le circuit 110 sont, de préférence, compris dans une puce électronique.

Dans l'exemple représenté, le dispositif 400 comprend des éléments identiques ou similaires à ceux du dispositif 300 de la figure 3, agencés de manière identique ou similaire. Ces éléments et leur agencement ne sont pas décrits ici à nouveau en détail. Seules les différences sont mises en exergue.

Le dispositif 400 diffère du dispositif 300 de la figure 3 en ce que, dans le dispositif 400, l'ensemble 370 du dispositif 300 est remplacé par un ensemble 470. Comme l'ensemble 370 du dispositif 300, l'ensemble 470 a pour fonctions de commander le transistor T360 de manière à réguler le potentiel du nœud 150 en agissant sur le courant I3, et de consommer un courant I5 image du courant I3. Le dispositif 400 protège ainsi le circuit 110 contre les attaques.

L'ensemble 470 du dispositif 400 diffère de l'ensemble 370 du dispositif 300 de la figure 3, en ce que :
- l'ensemble 370 comprend un transistor T410 électriquement en série avec le transistor T372 ;
- l'amplificateur opérationnel 378 de l'ensemble de la figure 3 est remplacé par un amplificateur opérationnel 478. L'amplificateur opérationnel 478 reçoit un écart entre la valeur constante VCST et le potentiel du nœud 150, et commande le transistor T410 ; et
- une borne 412 de conduction du transistor T410, située du côté du transistor T375, est reliée, de préférence connectée, aux grilles des transistors T372 et T360 du miroir de courant 374.

Dans l'exemple représenté, le transistor T410 est de type MOS à canal N. Dans cet exemple, la source du transistor T410 est reliée, de préférence connectée, à la borne 132 d'application du potentiel de référence GND. Dans cet exemple, l'amplificateur 478 a :
- une entrée non inverseuse (+) reliée, de préférence connectée, au nœud 134 ou à un nœud d'application d'un potentiel égal à, ou régulé à, la valeur constante ;
- une entrée inverseuse (-) reliée, de préférence connectée, au nœud 150 ; et
- une sortie reliée, de préférence connectée, à la grille du transistor T410. Autrement dit, le transistor T410 relie les grilles des transistors T372 et T360 au nœud 132 d'application du potentiel fixe GND.

En fonctionnement, l'amplificateur 478 agit sur le potentiel de grille du transistor T410. Il en résulte une action sur le courant I3 dans le transistor T360, de manière à réguler le potentiel du nœud 150 à la valeur constante VCST. Le transistor T360 est ainsi commandé de manière à réguler le potentiel du nœud 150 en agissant sur le courant I3.

Par rapport au dispositif 300 de la figure 3, dans le dispositif 400, la sortie de l'amplificateur 478 commande donc la grille du transistor T372 par l'intermédiaire du transistor T410. Le transistor T410 est plus petit que le transistor T372. De la même manière que pour le dispositif 200 de la figure 2, la commande du transistor T372 par l'amplificateur 478 est plus rapide que la commande du transistor T372 par l'amplificateur 378 du dispositif 300 de la figure 3.

De la même manière que pour le dispositif 200 de la figure 2, dans le dispositif 400, par rapport au dispositif 300 de la figure 3, du fait que la commande du transistor T372 est plus rapide et du fait que le transistor T410 est en série avec le transistor T372, le courant I5 consommé par le dispositif 400 suit plus rapidement les variations du courant I2 consommé par le circuit 110. Ceci permet, par rapport au dispositif 300 de la figure 3, une amélioration de la protection contre les attaques et/ou des variations plus rapides du courant I2 fourni au circuit électronique et/ou une réduction de variations résiduelles de la tension VDD fournie au circuit.

Divers modes de réalisation et variantes ont été décrits. La personne du métier comprendra que certaines caractéristiques de ces divers modes de réalisation et variantes pourraient être combinées, et d'autres variantes apparaitront à la personne du métier. En particulier, bien que l'on ait décrit ci-dessus des tensions VCC et VDD positives, la personne du métier saura adapter les modes de réalisation décrits ci-dessus à des tensions VCC et/ou VDD négatives, par exemple en échangeant les types N et P des conductivités de canal des transistors, en échangeant les entrées inverseuse et non inverseuse des amplificateurs opérationnels, et en inversant les sens des courants.

De plus, des modes de réalisation ont été décrits, dans lesquels des transistors sont commandés par des amplificateurs opérationnels. La personne du métier saura, en fonction de tensions d'alimentation des amplificateurs et de propriétés des amplificateurs et des transistors, mettre en œuvre des modes de réalisation dans lesquels les types N et P de conductivité de canal d'un ou plusieurs de ces transistors sont échangées, les entrées inverseuse et non inverseuse du ou des amplificateurs concernés étant échangées.

Enfin, la mise en œuvre pratique des modes de réalisation et variantes décrits est à la portée de la personne du métier à partir des indications fonctionnelles données ci-dessus.

## Revendications

1. Dispositif (200 ; 400) d'alimentation de circuit électronique (110), configuré pour :
- faire passer, dans un premier conducteur (251 ; 351) connecté à un nœud (150), un premier courant (I1') image d'un deuxième courant (I2) consommé par le circuit électronique ;
- faire passer un troisième courant (I3) dans un deuxième conducteur (353) connecté audit nœud, une première branche d'un miroir de courant (174 ; 374) faisant passer le troisième courant ;
- faire passer un quatrième courant (I4) constant dans un troisième conducteur (352) connecté audit nœud ;
- consommer un cinquième courant (I5) image du troisième courant ; et
- réguler un potentiel dudit nœud (150) en agissant sur un potentiel de grille d'un transistor (T210 ; T410) électriquement en série avec une deuxième branche du miroir de courant.

2. Procédé d'alimentation d'un circuit électronique (110), comprenant des étapes consistant à :
- faire passer, dans un premier conducteur (251 ; 351) connecté à un nœud (150), un premier courant (I1') image d'un deuxième courant (I2) consommé par le circuit électronique ;
- faire passer un troisième courant (I3) dans un deuxième conducteur (353) connecté audit nœud, une première branche d'un miroir de courant (174 ; 374) faisant passer le troisième courant ;
- faire passer un quatrième courant (I4) constant dans un troisième conducteur (352) connecté audit nœud ;
- consommer un cinquième courant (I5) image du troisième courant ; et
- réguler un potentiel dudit nœud (150) en agissant sur un potentiel de grille d'un transistor (T210 ; T410) électriquement en série avec une deuxième branche du miroir de courant.

3. Dispositif selon la revendication 1 ou procédé selon la revendication 2, dans lequel ledit transistor (T210 ; T410) relie un nœud (132 ; 130) d'application d'un potentiel, de préférence fixe, à des grilles reliées entre elles de transistors (T160, T172 ; T360, T372) du miroir de courant (174 ; 374).

4. Dispositif selon la revendication 1 ou 3, ou procédé selon la revendication 2 ou 3, dans lequel ledit transistor (T210 ; T410) est plus petit qu'un transistor (T172 ; T372) de la deuxième branche du miroir de courant (174 ; 374).

5. Dispositif selon l'une quelconque des revendications 1, et 3 à 4, ou procédé selon l'une quelconque des revendications 2 à 4, dans lequel le potentiel dudit nœud (150) est régulé à une valeur constante (VCST).

6. Dispositif ou procédé selon la revendication 5, dans lequel un élément résistif (355) fait passer le quatrième courant (I4) .

7. Dispositif ou procédé selon la revendication 5 ou 6, dans lequel la valeur constante (VCST) est celle d'un potentiel régulé (VDD) d'alimentation du circuit électronique (110).

8. Dispositif selon l'une quelconque des revendications 1, et 3 à 7, ou procédé selon l'une quelconque des revendications 2 à 7, dans lequel :
- une première branche d'un autre miroir de courant (146 ; 346) fait passer le premier courant (I1') ; et
- le potentiel dudit nœud (150) est régulé à une valeur de potentiel d'une borne (128 ; 134) d'une deuxième branche dudit autre miroir de courant.

9. Dispositif ou procédé selon la revendication 8, dans lequel un amplificateur opérationnel (278 ; 478) reçoit un écart de potentiel entre ledit nœud (150) et ladite borne (128 ; 134) de la deuxième branche dudit autre miroir de courant et agit sur le potentiel de grille dudit transistor (T210 ; T410) .

10. Dispositif ou procédé selon la revendication 8 ou 9, dans lequel la deuxième branche dudit autre miroir de courant (346) est électriquement en série avec le circuit électronique (110) entre une borne (130) d'application d'une tension d'alimentation (VCC) référencée par rapport à un potentiel de référence (GND) et une borne (132) d'application du potentiel de référence.

11. Dispositif ou procédé selon la revendication 10, dans lequel le cinquième courant (I5) est fourni par la borne (130) d'application de la tension d'alimentation.

12. Dispositif ou procédé selon l'une quelconque des revendications 9 à 11, dans lequel une borne (177 ; 377) d'une deuxième branche dudit miroir de courant (174 ; 374) a un potentiel régulé à la valeur du potentiel dudit nœud (150) .

13. Dispositif selon l'une quelconque des revendications 1, et 3 à 12, ou procédé selon l'une quelconque des revendications 2 à 12, dans lequel :
- un transistor supplémentaire (T175 ; T375) est en série avec la deuxième branche dudit miroir de courant (174 ; 374) ; et
- le transistor supplémentaire est commandé par une sortie d'un amplificateur opérationnel (176) recevant un écart entre le potentiel dudit nœud (150) et le potentiel de ladite borne (177 ; 377) de la deuxième branche dudit miroir de courant.

14. Dispositif selon l'une quelconque des revendications 1, et 3 à 13, ou procédé selon l'une quelconque des revendications 2 à 13, dans lequel un rapport entre valeurs des cinquième (I5) et troisième (I3) courants est égal à un autre rapport entre valeurs des deuxième (I2) et premier (I1') courants ou est égal à la somme dudit autre rapport et de l'unité.

15. Puce électronique comprenant un dispositif selon l'une quelconque des revendications 1, et 3 à 14 et le circuit électronique (110), ou configurée pour mettre en œuvre un procédé selon l'une quelconque des revendications 2 à 14.
